Europäisches Patentamt

European Patent Office

Office européen des brevets

(11) Publication number: **0 262 068**
A2

## (12) EUROPEAN PATENT APPLICATION

(21) Application number: 87500060.6

(22) Date of filing: 21.09.87

(51) Int. Cl.⁴: **B 60 C 27/06**

(30) Priority: 22.09.86 ES 8602072

(43) Date of publication of application:
30.03.88 Bulletin 88/13

(84) Designated Contracting States:
AT BE CH DE FR IT LI SE

(71) Applicant: Ibor Brines, Juan
Avd. Fernández Ladreda, 76- 5nr. Drcha
Gijon Asturias (ES)

(72) Inventor: Ibor Brines, Juan
Avd. Fernández Ladreda, 76- 5nr. Drcha
Gijon Asturias (ES)

(74) Representative: Gomez-Acebo y Pombo, José Miguel
c/o CLARKE, MODET & Co. Balmes, 191
E-08006 Barcelona (ES)

(54) Antiskid chains for motor vehicle wheels.

㊼ The invention relates to antiskid chains for motor vehicle wheels.

These chains present easy construction characteristics involving easy assembly and disassembly and optimum operation thereof.

Said chains are comprised of facing and equally spaced parallel substantially U-shaped rugged links related with connecting rods or rugged strips jointed to said links by the ends thereof; the assembly defining, in horizontal position, a passage for the vehicle wheels, said connecting rods autocentering and fixing said chain by self-locking inasmuch as said links constitute elastic members.

FIG. 1

EP 0 262 068 A2

**Description**

# ANTISKID CHAINS FOR MOTOR VEHICLE WHEELS

The invention relates to antiskid chains for motor vehicle wheels.

There are presently known chains of this type which present very complex disadvantages both in constitution and operation thereof.

That is to say, in most of known chains the user is confronted with fitting problems which very often are important due to chain construction complexity; ought to this fact the user desist from using same.

In other cases, conventional chains are subjected to stresses during use thereof thus becoming damaged and finally broken.

Chains of this invention do not present any of the aforesaid problems as they are of simple construction and more importantly chains are laid down on the floor and their construction allow self-aligning entry and self-correction of fitting position by the own movement of the wheels.

That is to say, chains are fixed to wheels by own movement of wheels thereon and also the user has not to check whether the chains are exactly extending in same direction as the movement of the wheels.

Finally, it is pointed out as a main advantage of the invention that chains are fixed to wheels by the principle of self-locking due to the elastic characteristics thereof.

According to the invention, chains are constituted by a series of links fore to aft sideways related by rigid connecting rods jointed to the links, the spacing of the connecting rods being equivalent or same as the transversal spacing of the links.

On end links there are provided, at least on the outer side according to fitting of the chain, latching means which are equivalent to one of the aforesaid spacings.

Each chain link, once the chain is fitted, is located at 30° from adjacent ones, thus assuring that upon the chain being fitted to the wheel, for any position thereof, resting of the wheel on the floor is made through a link, thus preventing the wheel from skidding on ice, snow, mud, etc.

Each link is generally U-shaped on which straight leg center there have been made drawings defining reliefs or outside projections.

The straight leg is extended at both ends by outwardly convex curved portions, topped by concave curved areas, for not damaging the tyre, the connecting rods being fixed on the central wall of these end areas by rivets, presenting on each pivoting joint an elastic washer mounted on the rivet shaft, which washer prevent the connecting rod from rotating when the link is in contact with the floor.

The connecting rods are pivotable on their ends thus allowing the chain to be zigzag bent.

Furthermore, said connecting rods determine the chain rectilineal uniformity for wheel self-aligned entry and fitting position self-correction by the own wheel movement.

For a better understanding of constitution, fitting and use of the invention chains, an embodiment is herebelow shown by way of non limitative example according to attached drawings wherein:

Figure 1 shows a perspective view of one portion of the extended chain.

Figure 2 shows in perspective an area of one link of Figure 1, and Figure 2a shows enlarged one detail of two connecting rods jointed to a link.

Figure 3 shows the chain extended.

Figure 4 shows a side view of Figure 3.

Figure 5 shows a view os chain locking.

Figure 5a shows a partial section of the link.

Figure 6 shows a view of a wheel with the chain fitted.

Figure 7 shows a side view of the chain bent in storing position.

Figure 8 shows a view of two chains self-sligning with wheels, when chains are located in a direction other than to the one corresponding to vehicle wheels movement.

Figures 9, 9a and 9b show a series of views of chain locking member.

The antiskid chain 1 for vehicle wheels is comprised by preferably parallel and horizontally facing links 2.

Links 2 are related each other by lateral and facing connecting rods 3. Said connecting rods are rotatably provided on rivets 4 while an elastic washer is provided between said connecting rod and link.

The chain ends are provided with chain locking means 5, as shown in Figures 3, 4 and 6.

Each link 2 consists of one steel strip 7 of predetermined width. This strip is substantially U-shaped.

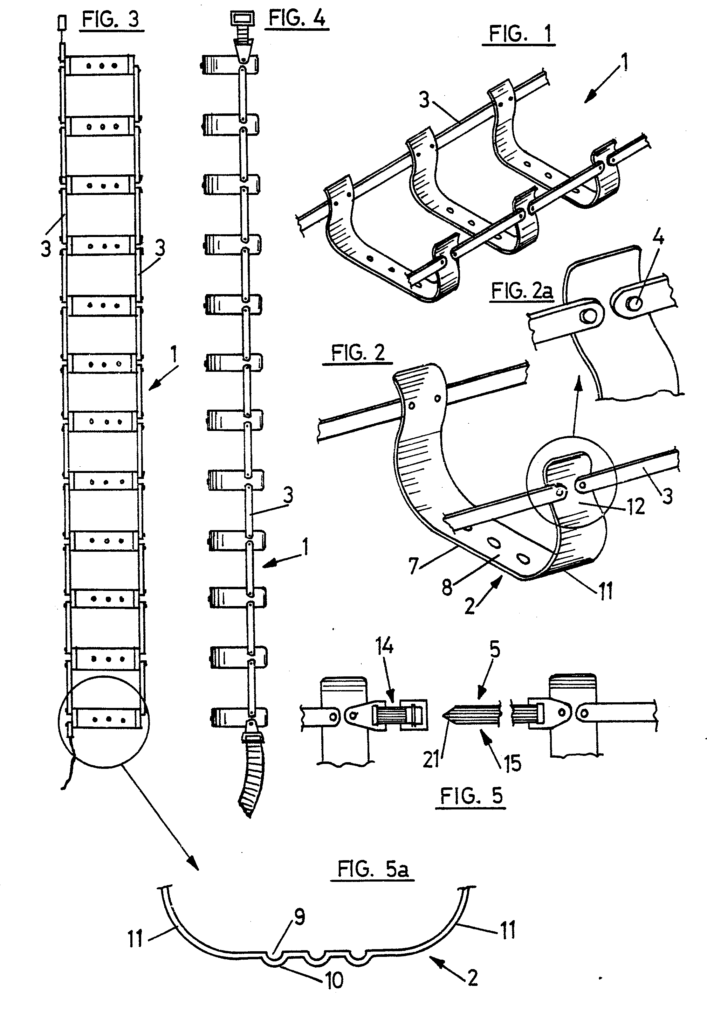

There is shown in Figure 2 a link 2 the horizontal leg of which 8 is provided with drawings 9 forming shoulders 10.

Said horizontal leg 8 is provided with outwardly extended convex curved arched runs which are both top extended in convex curved runs 12 wherein said connecting rods are fixed by aforesaid rivets.

The shape and construction of said links cause these to elastically operate thus facilitating link engagement to the vehicle wheel. This engagement is helped by the arrangement of said connecting rod.

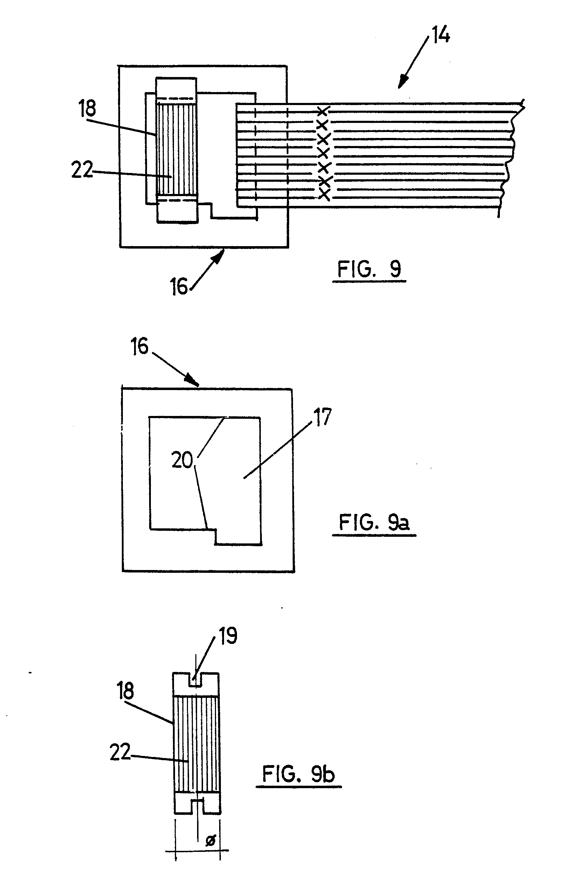

Said lock 13 consists of two portions 14 and 15 which are fixed to end links; one of these portions, i.e., portion 14, is provided with a buckle as shown in Figures 9, 9a and 9b.

Said buckle 16 is provided with an assymetric notch 17 whereby a roller 18, provided with notches 19 engaging with notch facing sides 20, is fixed.

Said roller 18 is provided with grooves 22 for self-locking of locking strip 21 of portion 15.

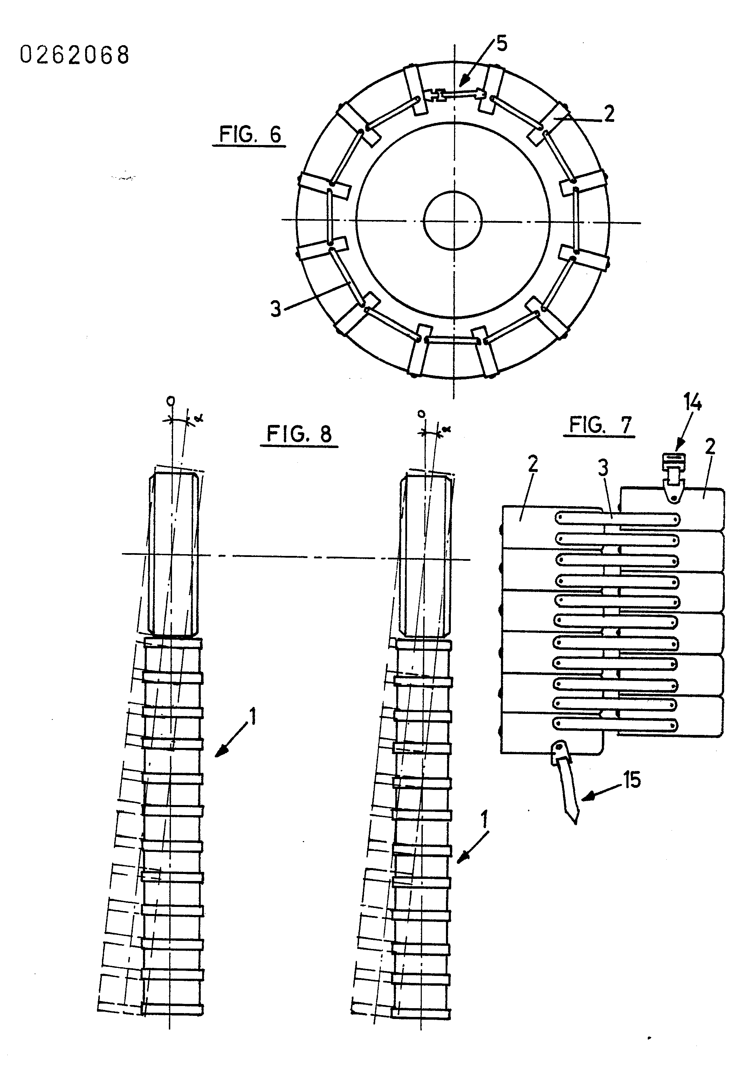

Finally it is pointed out that the chain can be zigzag bent as shown in Figure 7.

While one form of the invention has been shown, it will be understood that there are many others which are within the scope of the present disclosure and accordingly within the scope of the appended claims.

## Claims

1. Antiskid chains for motor vehicle wheels, characterized in that each chain 1 consists of links 2 related with connectings rods 3 jointed by the ends thereof to said links 2 by rivetted shafts 4 while latching and locking means 5 are provided on the outer side of said end links, depending on said chain fitting position; said links consisting of elastic members and defining a passage for the wheels, the engagement and fitting of said chain to said wheel being effected by self-centering on the tyre; and wherein said connecting rods 3 determine the rectilineal uniformity of said chain for self-aligned entry of the vehicle wheels and the self-correction of fitting position by the own movement of said wheel.

2. Chains according to claim 1 characterized in that on each joint area, between said connecting rod 3 and said link 2, there is provided an elastic washer which prevents said connecting rod 3 from rotating when said link 2 is located in a lower position on the floor.

3. Chains according to claim 1 characterized in that said connecting rods 3 allow said chain assembly 1 to be bent into a stored position.

4. Chains according to claim 1 characterized in that the number of links 2 is such that, when fitting said chain 1 to said wheel, two consecutive links form a 30° angle whereby, in any position of said wheel, there will always be one link in direct contact with the floor thus preventing said tyre from skidding.

5. Chains according to claim 1 characterized in that each link 2 consists of a substantially U-shaped rugged steel strip on the horizontal leg 8 of which there are provided drawings 9 which form outer projections 10 while the side legs of which each present a convex curved run 11 extending by another upper and extreme concave curved run 12 wherein the respective connecting rod jointed fixation is set up.

87500060.6

0262068

FIG. 3    FIG. 4    FIG. 1

3    3    1

3    1

3

FIG. 2a

4

FIG. 2

3    1

3

12    3

7    11

8    2

14    5

21    15

FIG. 5

FIG. 5a

9

11    11

10    2

0262068

FIG. 6

FIG. 8    FIG. 7

0262068

FIG. 9

FIG. 9a

FIG. 9b